# EUROPEAN PATENT APPLICATION

(11) **EP 4 506 203 A2**
(43) Date of publication of application: **12.02.2025**
(21) Application number: 24193194.8
(22) Date of filing: 06.08.2024
(51) Int. Cl.: B60L 15/20, B60L 3/00, B60L 7/18

(54) **ELECTRIC VEHICLE**

(30) Priority: 09.08.2023 JP 2023129963
(71) Applicant: Kubota Corporation, Osaka-shi, Osaka 556-8601 (JP)
(72) Inventor: OKAZAKI, Kazuto, SAKAI-SHI, OSAKA, 5900908 (JP); KAWABATA, Shinichi, SAKAI-SHI, OSAKA, 5900908 (JP); NAGATOMI, Tatsuya, SAKAI-SHI, OSAKA, 5900908 (JP)
(74) Representative: Cabinet Beau de Loménie

(57) **Abstract**

An electric vehicle includes: an electric motor (12): a travel device driven by power transmitted from the electric motor (12); a vehicle speed sensor (31) configured to detect a vehicle speed; and a motor controller (24) configured to control the electric motor (12). The motor controller (24) is configured to perform a stop control in such a manner as to maintain a rotation speed of the electric motor (12) at a predetermined reference rotation speed (RR) larger than zero, when the vehicle speed detected by the vehicle speed sensor (31) reaches a predetermined reference vehicle speed (RS) or less.

## Description

### BACKGROUND OF THE INVENTION

### 1. Field of the Invention

The present invention relates to an electric vehicle driven by power transmitted from an electric motor.

### 2. Description of the Related Art

As disclosed in Patent Literature 1, an electric vehicle includes various brakes such as a wheel brake and a parking brake, so that the vehicle is braked and stopped by the brakes. The brakes are operated by a brake pedal, a hand brake lever, and the like.

Here, even in a case where the electric vehicle stops, when the electric vehicle stops on a slope, the electric vehicle may start moving if the brake pedal is not kept stepped on or the parking brake is not operated.

On this account, the electric vehicle may include an angle sensor configured to detect whether or not the electric vehicle stops on a slope. Such an electric vehicle performs a control such that the brakes are automatically maintained in a braking state, when the angle sensor detects a body being stopping on the slope.

### Citation List

### Patent Literature

Patent Literature 1: Japanese Unexamined Patent Application Publication No. 2022-176727

### SUMMARY OF THE INVENTION

### Technical Problem

However, it is necessary for such an electric vehicle to include the angle sensor and have a configuration to automatically control the brakes in response to an inclination angle, and it is requested to easily brake the electric vehicle or maintain the electric vehicle to be stopped with a simpler configuration.

An object of the present invention is to brake an electric vehicle with a simple configuration and with accuracy.

### Solution to Problem

In order to achieve the above object, an electric vehicle according to one embodiment of the present invention includes: an electric motor: a travel device driven by power transmitted from the electric motor; a vehicle speed sensor configured to detect a vehicle speed; and a motor controller configured to control the electric motor. The motor controller is configured to perform a stop control in such a manner as to maintain a rotation speed of the electric motor at a predetermined reference rotation speed larger than zero, when the vehicle speed detected by the vehicle speed sensor reaches a predetermined reference vehicle speed or less.

In such a configuration, even when the vehicle speed reaches zero, the electric motor maintains the reference rotation speed and keeps rotating, so that power is kept transmitted to the travel device. Accordingly, even in a case where the electric vehicle stops on a slope, it is possible to restrain the electric vehicle from moving along the inclination of the slope even when a brake is not operated. This allows the electric vehicle to easily maintain its stop state and to easily brake (stop) with accuracy.

The electric vehicle may further include: a torque acquisition section configured to acquire an output torque from the electric motor; and a rotation speed sensor configured to detect the rotation speed of the electric motor. When the vehicle speed is higher than the reference vehicle speed, the motor controller may control the electric motor based on the output torque, and when the vehicle speed is equal to or less than the reference vehicle speed, the motor controller may control the electric motor based on the rotation speed.

Generally, the electric motor is controlled based on an output torque (a torque control). In the above configuration, the stop control is performed based on the rotation speed of the electric motor (a rotation speed control), thereby making it possible to control the rotation speed of the electric motor with accuracy. As a result, the electric motor can be maintained at a reference rotation speed with accuracy, thereby allowing the electric vehicle to maintain its stop state and to easily brake (stop) with accuracy.

The motor controller may perform the stop control for a predetermined retention period after the vehicle speed reaches the reference vehicle speed or less.

When the electric motor keeps operated for a long time, the electric motor or an electric device driven by the electric motor may overheat. In the above configuration, the stop control is continued only for a predetermined retention period, so that the electric motor is restrained from being kept operated for a long time, thereby making it possible to restrain the electric motor or the electric device from overheating.

The electric vehicle may further include an electric device driven by the electric motor, and a temperature sensor configured to detect a temperature of the electric device. When the temperature detected by the temperature sensor reaches a predetermined temperature or more, the motor controller may decrease the rotation speed of the electric motor in response to the temperature.

With such a configuration, it is possible to gradually decrease the rotation speed of the electric motor as the temperature of the electric device becomes higher. Hereby, the electric device is restrained from reaching a high temperature, thereby making it possible to restrain the electric device from overheating.

The electric vehicle may further include a brake configured to brake the travel device, and the motor controller may perform the stop control regardless of whether the brake is operated or not.

With such a configuration, it is possible to restrain the electric vehicle from moving along the inclination of the slope regardless of the operation of the brake. As a result, the electric vehicle can maintain its stop state and easily brake (stop) with accuracy.

The electric vehicle may further include a stop operation tool configured to receive an operation to stop the stop control, and the motor controller may stop the stop control in response to the operation on the stop operation tool.

The stop control may not need to be performed depending on the state of a place where the electric vehicle stops, the stop state of the electric vehicle, or the like. In the above configuration, the motor control can receive an operation to stop the stop control depending on the situation, thereby allowing the electric vehicle to perform the stop control only when necessary and to easily brake (stop) with accuracy.

The electric vehicle may further include: a brake configured to brake the travel device; and a braking operation tool configured to receive an operation on the brake. The motor controller may stop the stop control in response to the operation on the braking operation tool during the stop control.

In such a configuration, the motor controller can receive the operation to stop the stop control by use of an existing operation tool, thereby allowing the electric vehicle to perform the stop control only when necessary, with a simple configuration, and to easily brake (stop) with accuracy.

The electric vehicle may further include: a battery configured to supply electric power to the electric motor; a regeneration controller configured to perform a regenerative control allowing electric power generated by braking the electric motor to be regenerated to the battery; an accelerator operation tool configured to receive an operation to adjust an output from the electric motor; and a rotation speed sensor configured to detect the rotation speed of the electric motor. The regeneration controller may control a regeneration output in the regenerative control in response to at least either of an operation position of the accelerator operation tool and the rotation speed detected by the rotation speed sensor.

Generally, the electric vehicle includes a transmission such as a continuously variable transmission. The transmission changes a transmission state based on an operation to be performed on an operation tool related to traveling, such as the accelerator operation tool, the vehicle speed, the rotation speed of the electric motor, or the like, and generates a braking force.

In the above configuration, even in a case where the electric vehicle does not include a transmission, a kinetic-energy of the electric motor is converted into electric power in response to an operation performed on the accelerator operation tool or the rotation speed of the electric motor, so that a braking force can be generated.

The electric vehicle may further include: an electric device driven by the electric motor; and a temperature sensor configured to detect a temperature of the electric device. The regeneration controller may control the regeneration output further in consideration of the temperature detected by the temperature sensor.

With such a configuration, it is possible to decrease an operation amount of the electric motor by increasing a regeneration output as the temperature of the electric device is higher. As a result, electric power to be transmitted to the electric device is reduced, so that the electric device is restrained from reaching a high temperature, thereby making it possible to restrain the electric device from overheating.

The electric vehicle may further include a predetermined work device, and the work device may perform an operation while the electric vehicle is traveling.

With such a configuration, even an electric work vehicle can easily maintain its stop state and easily brake (stop) with accuracy.

### BRIEF DESCRIPTION OF THE DRAWINGS

Fig. 1 is a side view of a utility vehicle viewed from the left side;
Fig. 2 is a plan view illustrating a transmission case, an electric motor, an inverter, and a battery;
Fig. 3 is a view illustrating a configuration to perform a stop control; and
Fig. 4 is a view illustrating the flow of the stop control.

### DESCRIPTION OF THE PREFERRED EMBODIMENTS

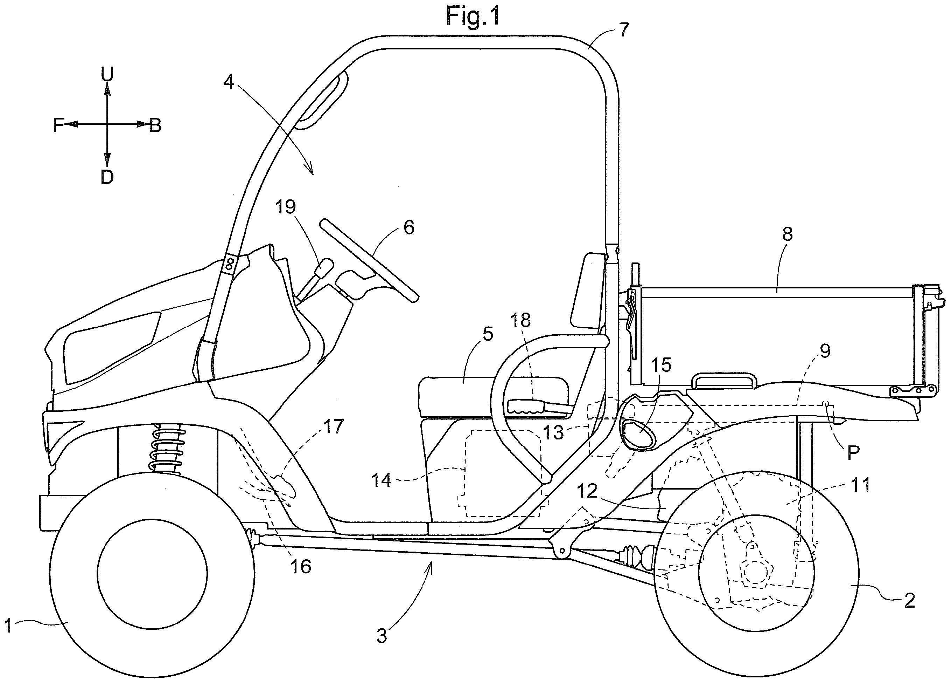

A utility vehicle as an example of an electric vehicle according to the present invention will be described below with reference to the drawings. Note that, in the following description, a direction of an arrow F illustrated in Fig. 1 is referred to as a "vehicle-body front side", a direction of an arrow B is referred to as a "vehicle-body rear side", a direction of an arrow U is referred to as a "vehicle-body upper side", a direction of an arrow D is referred to as a "vehicle-body lower side", a direction of the front of the plane of paper of Fig. 1 is referred to as a "vehicle-body left side", and a direction of the back of the plane of paper of Fig. 1 is referred to as a "vehicle-body right side."
The right-left direction of a vehicle body corresponds to a vehicle-body width direction.

### [Whole Configuration of Utility Vehicle]

A utility vehicle illustrated in Fig. 1 is used for multipurpose application such as package transportation or recreation activities. The utility vehicle includes a pair of right and left front wheels 1 as travel devices, and a pair of right and left rear wheels 2 as travel devices. The front wheels 1 and the rear wheels 2 are provided in a traveling vehicle body 3 (a body). The front wheels 1 are steerable and drivable, and the rear wheels 2 are drivable.

The utility vehicle includes a driving section 4 in which a driver rides, and the driving section 4 is provided in a front portion of the traveling vehicle body 3. The driving section 4 of the utility vehicle includes a driver seat 5, a steering wheel 6 configured to steer the front wheels 1, a ROPS 7 surrounding a cabin space, an accelerator pedal 16 configured to control a vehicle speed, a brake pedal 17 configured to operate a wheel brake, a hand brake lever 18 configured to operate a parking brake, a shift lever 19 configured to perform a shifting operation, and so on. The wheel brake works to brake the utility vehicle in response to an operation on the brake pedal 17, and the parking brake maintains the utility vehicle to be stopped in response to an operation on the hand brake lever 18.

The utility vehicle includes a deck 8 behind the driving section 4. The deck 8 is held by a vehicle body frame 9. The deck 8 is vertically swingable around a connection axis P between the deck 8 and the vehicle body frame 9 as a swing axis and is changeable between a dump state where the deck 8 swings upward and a traveling state where the deck 8 swings downward.

### [Drive of Travel Device]

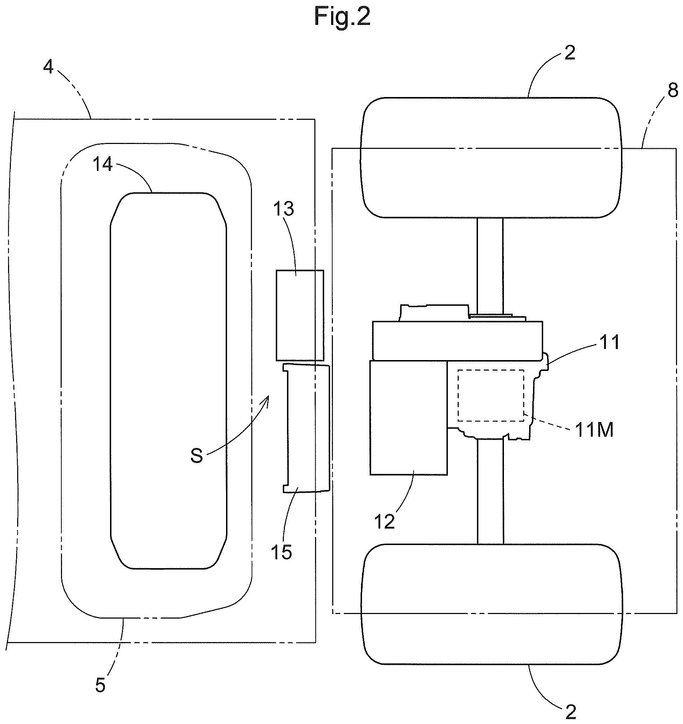

As illustrated in Fig. 2, the utility vehicle includes a transmission case 11, an electric motor 12, an inverter 13, and a battery 14 to drive the front wheels 1 and the rear wheels 2. The battery 14 is charged by a charger 15 provided in the traveling vehicle body 3 (see Fig. 1).

As illustrated in Figs. 1, 2, the transmission case 11 is provided between the right and left rear wheels 2, under the deck 8. The battery 14 is provided in a space under the driver seat 5. The battery 14 is provided in a mounting posture in which the length thereof in the vehicle-body width direction is longer than the length thereof in the vehicle-body front-rear direction. The electric motor 12 is provided under the deck 8. The electric motor 12 is provided between the pair of right and left rear wheels 2 in such a manner as to be closer to the vehicle-body rear side than the battery 14 but closer to the vehicle-body front side than the transmission case 11. The inverter 13 is provided in a space S placed closer to the vehicle-body rear side than the battery 14 but closer to the vehicle-body front side than the electric motor 12. The inverter 13 is disposed within the width of the battery 14 in the space S.

Electric power is supplied from the battery 14 to the inverter 13 and converted into alternating current electricity, and the alternating current electricity is supplied from the inverter 13 to the electric motor 12, so that the electric motor 12 is driven. The transmission case 11 receives power from the electric motor 12, so that the power is shifted by a transmission 11M provided in the transmission case 11. The power thus shifted is output from a rear-wheel differential mechanism (not illustrated) provided in the transmission case 11 to the right and left rear wheels 2. The power thus shifted is output to the right and left front wheels 1.

### [Stop Control]

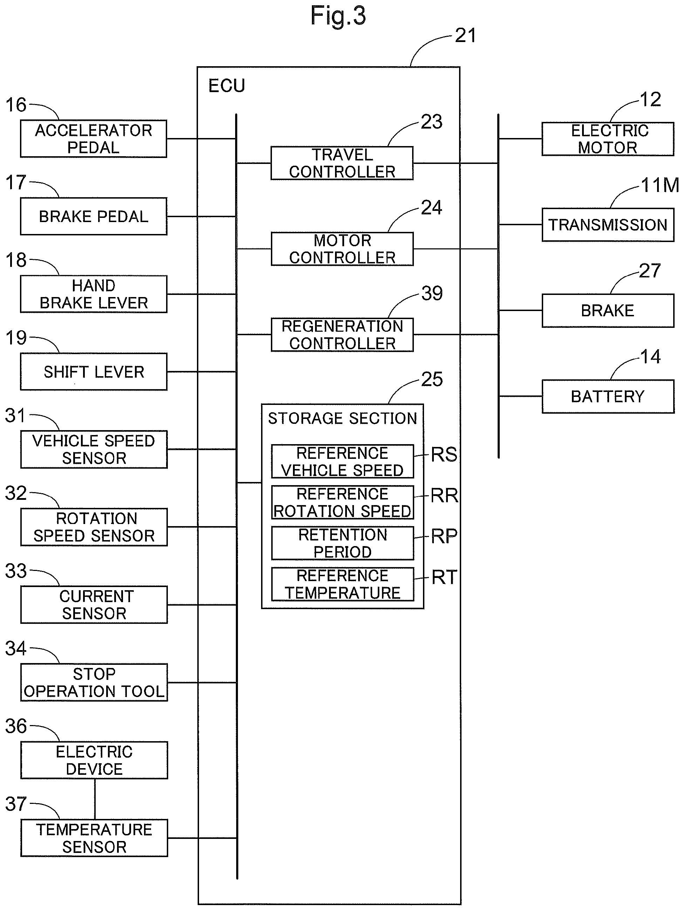

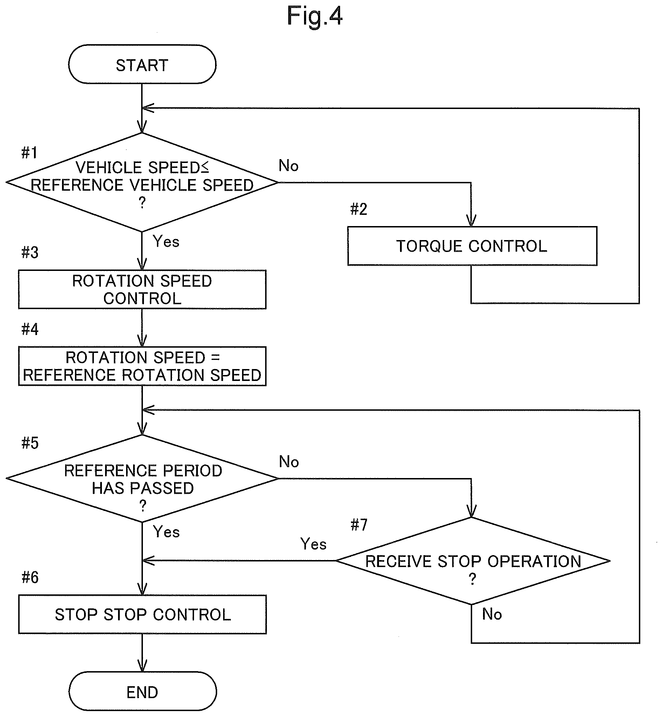

As illustrated in Figs. 3, 4, the utility vehicle includes an ECU 21 including a processor such as a CPU. The ECU 21 controls traveling or the like of the utility vehicle in response to an operation performed by the driver or automatically.

The ECU 21 includes a travel controller 23, a motor controller 24, and a storage section 25. The travel controller 23 controls driving and steering of the travel devices in response to an operation on an operation tool. The operation tool is the steering wheel 6 (see Fig. 1), the accelerator pedal 16, the shift lever 19, the brake pedal 17, the hand brake lever 18, or the like.

More specifically, the travel controller 23 controls the rotation speed of the electric motor 12 via the motor controller 24 in response to an operation on the accelerator pedal 16. The travel controller 23 controls the transmission state of the transmission 11M in response to an operation on the shift lever 19. The travel controller 23 controls a brake 27 in response to operations on the brake pedal 17 and the hand brake lever 18. The brake 27 includes the above-mentioned wheel brake and parking brake and may include other braking systems such as a regenerative brake (described later). The wheel brake is operated mainly by the brake pedal 17, and the parking brake is operated mainly by the hand brake lever 18.

The utility vehicle performs a stop control as an auxiliary function to maintain the body in a stop state with accuracy. The stop control is a control in which the rotation speed of the electric motor 12 is maintained at a predetermined rotation speed when the vehicle speed nears zero and the utility vehicle comes closer to a stop state. More specifically, the stop control is a control in which, in response to the vehicle speed of the utility vehicle reaching a predetermined reference vehicle speed RS or less, the rotation speed of the electric motor 12 is maintained at a predetermined reference rotation speed RR that is larger than zero.

The utility vehicle further includes a vehicle speed sensor 31 and a rotation speed sensor 32 to perform the stop control. The vehicle speed sensor 31 detects a vehicle speed at which the utility vehicle travels. The vehicle speed sensor 31 can be configured to detect the vehicle speed by detecting the rotation speed of an axle but may detect the vehicle speed with a given configuration. The rotation speed sensor 32 detects the rotation speed of the electric motor 12 with a given configuration. The rotation speed of the electric motor 12 is the rotation speed of an output shaft of the electric motor 12. The stop control is performed by the motor controller 24 based on detection values from the vehicle speed sensor 31 and the rotation speed sensor 32.

During traveling of the utility vehicle, the motor controller 24 determines whether or not the vehicle speed of the utility vehicle which vehicle speed is detected by the vehicle speed sensor 31 is equal to or less than the reference vehicle speed RS (step #1 in Fig. 4). The reference vehicle speed RS is stored in the storage section 25 in advance, and the motor controller 24 reads the reference vehicle speed RS stored in the storage section 25 and performs the determination. In a case where the vehicle speed is larger than the reference vehicle speed RS (No in step #1 in Fig. 4), the motor controller 24 performs a control on the electric motor 12 based on an output torque from the electric motor 12 (a torque control) in response to an operation on the operation tool (step #2 in Fig. 4). The output torque is converted from an output current by the motor controller 24. The output current is an output current from the inverter 13 and detected by a current sensor 33. Note that the output torque may be acquired by a torque acquisition section constituted by the current sensor 33 and some functions of the motor controller 24, but the torque acquisition section may be a torque sensor provided in the electric motor 12 and configured to directly detect the output torque.

When the vehicle speed reaches the reference vehicle speed RS or less (Yes in step #1 in Fig. 4), the motor controller 24 switches the torque control to a rotation speed control and controls the electric motor 12 based on the rotation speed of the electric motor 12 which rotation speed is detected by the rotation speed sensor 32 (step #3 in Fig. 4).

Then, the motor controller 24 maintains the rotation speed of the electric motor 12 at the reference rotation speed RR (step #4 in Fig. 4). The reference rotation speed RR is stored in the storage section 25 in advance, and the motor controller 24 reads the reference rotation speed RR stored in the storage section 25 and controls the electric motor 12. The reference rotation speed RR is a rotation speed that allows the body to travel at a low speed and is a rotation speed equal to or less than a rotation speed corresponding to the reference vehicle speed RS. Note that the stop control is performed regardless of whether the brake pedal 17 or the hand brake lever 18 as a braking operation tool is operated or not, that is, regardless of whether the brake 27 is in a braking state (the brake 27 is operated) or not (the brake 27 is not operated). However, this does not apply to a case where the braking operation tool is used as a stop operation tool 34 (described later).

Right before the body stops, more specifically, at the time when the vehicle speed is decelerated to the reference vehicle speed RS as such, the motor controller 24 maintains the electric motor 12 at the reference rotation speed RR. By performing such a control, the electric motor 12 continues outputting power at the reference rotation speed RR even while the body stops. As a result, even in a case where the body stops on a slope, it is possible to restrain the body from moving along the inclination of the slope even when the brake 27 is not operated. For example, even when the body stops while the body is moving forward to climb the slope, the electric motor 12 keeps rotating. In this state, the body is to slightly move forward unless its transmission state is changed from a forward-travel state, so that it is possible to retrain the body from moving rearward along the inclination. This allows the utility vehicle to easily maintain its stop state and to easily brake (stop) with accuracy.

Further, during the stop control, when the control on the electric motor 12 is changed from the torque control to the rotation speed control, it is possible to more accurately control the rotation speed of the electric motor 12 at the reference rotation speed RR.

### [Maintaining of Stop Control]

The motor controller 24 may maintain the stop control only for a predetermined period or may maintain the stop control until a predetermined operation is performed. The stop control may be maintained for a predetermined period but stopped when a predetermined operation is performed during the predetermined period.

For example, the motor controller 24 measures an elapsed time after the stop control is started, and determines whether a predetermined retention period RP has passed or not (step #5 in Fig. 4). The retention period RP is stored in the storage section 25 in advance, and the motor controller 24 reads the retention period RP stored in the storage section 25 and performs the determination.

When the motor controller 24 determines that the retention period RP has passed (Yes in step #5 in Fig. 4), the motor controller 24 stops the stop control (step #6 in Fig. 4).

When the electric motor 12 keeps operating for a long time, the electric motor 12 may reach a high temperature and have a malfunction. In addition, when the electric motor 12 reaches a high temperature, other devices may also reach a high temperature and have a malfunction. When the stop control is stopped at the time when the retention period RP has passed, so as to stop the electric motor 12 in response to the vehicle speed, it is possible to restrain the electric motor 12 from reaching a high temperature, thereby making it possible to restrain the electric motor 12 or other devices from having a malfunction.

When the motor controller 24 determines that the retention period RP has not passed (No in step #5 in Fig. 4), the motor controller 24 determines whether a predetermined operation tool is operated or not (step #7 in Fig. 4).

The stop control is kept performed until the predetermined operation tool is operated (No in step #7 in Fig. 4), and when the predetermined operation tool is operated (Yes in step #7 in Fig. 4), the motor controller 24 stops the stop control (step #6 in Fig. 4).

The predetermined operation tool can be an exclusive stop operation tool 34 provided to be operable by a driver but may be other operation tools. For example, the brake pedal 17 or the hand brake lever 18 as the braking operation tool may be used as the predetermined operation tool, and the motor controller 24 may stop the stop control in response to an operation on the brake pedal 17 or the hand brake lever 18. Alternatively, the motor controller 24 may stop the stop control when the utility vehicle starts traveling in response to an operation on the accelerator pedal 16 or the shift lever 19.

When the utility vehicle stops at a place that is not inclined or the utility vehicle is braked by the brake 27, the necessity to perform the stop control is small. In a case where the utility vehicle is brought into a predetermined state when the predetermined operation tool is operated or the utility vehicle starts traveling, the stop control is stopped. As a result, the stop control can be stopped depending on the situation, so that the utility vehicle can perform the stop control only when necessary.

### [Alternative Embodiments]

(1) In the above embodiment, at the time of the stop control, the motor controller 24 may control the electric motor 12 by any method such as the torque control instead of the rotation speed control. This makes it possible to perform the stop control while any control is performed.
(2) In the above embodiment, the motor controller 24 may control the rotation speed of the electric motor 12 in the stop control in response to the temperature of an electric device 36 provided in the utility vehicle. The electric device 36 may work based on electric power supplied from the battery 14 and may be driven by the electric motor 12. The utility vehicle includes a temperature sensor 37 configured to detect the temperature of the electric device 36. The temperature sensor 37 can have any configuration, provided that the temperature sensor 37 can detect the temperature of the electric device 36.

When the temperature of the electric device 36 which temperature is detected by the temperature sensor 37 reaches a predetermined reference temperature RT or more, the motor controller 24 decreases the rotation speed of the electric motor 12 from the reference rotation speed RR. For example, when the temperature of the electric device 36 reaches the predetermined reference temperature RT or more, the motor controller 24 gradually decreases the rotation speed of the electric motor 12 in response to the temperature of the electric device 36.

This makes it possible to restrain an increase in the temperature of the electric motor 12, thereby restraining the temperature of the electric device 36 from increasing due to the temperature of the electric motor 12. Hereby, it is possible to restrain such a situation the electric device 36 reaches a high temperature and has a malfunction.

(3) In the above embodiment, the utility vehicle may include a regenerative brake. That is, the utility vehicle performs a regenerative control such that electric power generated by braking the electric motor 12 is regenerated to the battery 14, so that the body is braked by decreasing the rotation speed of the electric motor 12 just by the electric power thus generated. The regenerative control is controlled by a regeneration controller 39 provided in the ECU 21.

For example, the regeneration controller 39 controls a regeneration output in the regenerative control in response to at least either of the operation position of the accelerator pedal 16 corresponding to an accelerator operation tool and the rotation speed of the electric motor 12 which rotation speed is detected by the rotation speed sensor 32. The body is braked and regenerative electric power is regenerated to the battery 14 in response to the magnitude of a regeneration output corresponding to the rotation speed of the electric motor 12 which rotation speed is to be decreased.

By performing such a regenerative control, it is possible to brake the body without the use of the brake 27 such as a wheel brake and to achieve an efficient power consumption of the battery 14. Even when a transmission such as a continuously variable transmission is not provided, a dynamic brake can be achieved by the regenerative brake along with the regenerative control.

(4) In the above alternative embodiment (3), the motor controller 24 may control the regeneration output in consideration of the temperature of the electric device 36. That is, the regeneration controller 39 controls the regeneration output in the regenerative control in response to at least either of the operation position of the accelerator pedal 16 corresponding to the accelerator operation tool and the rotation speed of the electric motor 12 which rotation speed is detected by the rotation speed sensor 32, and further in consideration of the temperature of the electric device 36 which temperature is detected by the temperature sensor 37.

Hereby, the motor controller 24 can increase the regeneration output as the temperature of the electric device 36 is higher, thereby decreasing the operation amount of the electric motor 12. This makes it possible to restrain an increase in the temperature of the electric motor 12, thereby restraining the temperature of the electric device 36 from increasing due to the temperature of the electric motor 12. As a result, it is possible to restrain such a situation that the electric device 36 reaches a high temperature and has a malfunction.

(5) In the above embodiment, the ECU 21 is not limited to a unit constituted by the aforementioned functional blocks but may be constituted by any functional blocks. For example, each function block of the ECU 21 may be further subdivided, or some or all of the function blocks may be integrated with each other. The ECU 21 may include other functional blocks for performing controls other than the braking control on the utility vehicle, or the ECU 21 may be for exclusive use of only for braking (the stop control). The functions of the ECU 21 are not limited to the above functional blocks and may be implemented by a method performed by a given functional block. Some or all of the functions of the ECU 21 may be constituted by software. A program for the software is stored in a given storage device and is performed by a processor such as the CPU included in the ECU 21 or a processor provided separately.

(6) In the above embodiment, the utility vehicle is not limited to an electric vehicle driven only by the electric motor 12 and may be a hybrid electric vehicle driven by the electric motor 12 and an engine.

(7) In the above embodiment, the electric vehicle of the present invention is not limited to a utility vehicle and may be a work vehicle provided with a work device for farming or other operations and configured to perform various operations while the work vehicle is traveling.

### Industrial Applicability

The present invention is applicable to various electric vehicles driven by an electric motor.

### Description of the Reference Numerals

- 1: front wheel (travel device)
- 2: rear wheel (travel device)
- 12: electric motor
- 14: battery
- 16: accelerator pedal (accelerator operation tool)
- 17: brake pedal (braking operation tool)
- 18: hand brake lever (braking operation tool)
- 23: travel controller
- 24: motor controller
- 27: brake
- 31: vehicle speed sensor
- 32: rotation speed sensor
- 34: stop operation tool
- 36: electric device
- 37: temperature sensor
- 39: regeneration controller
- RP: retention period
- RR: reference rotation speed
- RS: reference vehicle speed
- RT: reference temperature

## Claims

1. An electric vehicle, comprising:
an electric motor (12);
a travel device (1, 2) driven by power transmitted from the electric motor (12);
a vehicle speed sensor (31) configured to detect a vehicle speed; and
a motor controller (24) configured to control the electric motor (12),
the motor controller (24) being configured to perform a stop control in such a manner as to maintain a rotation speed of the electric motor (12) at a predetermined reference rotation speed (RR) larger than zero, when the vehicle speed detected by the vehicle speed sensor (31) reaches a predetermined reference vehicle speed (RS) or less.

2. The electric vehicle according to claim 1, further comprising:
a torque acquisition section configured to acquire an output torque from the electric motor (12); and
a rotation speed sensor (32) configured to detect the rotation speed of the electric motor (12), wherein
when the vehicle speed is higher than the reference vehicle speed (RS), the motor controller (24) controls the electric motor (12) based on the output torque, and
when the vehicle speed is equal to or less than the reference vehicle speed (RS), the motor controller (24) controls the electric motor (12) based on the rotation speed.

3. The electric vehicle according to claim 1, further comprising:
a battery (14) configured to supply electric power to the electric motor (12);
a regeneration controller (39) configured to perform a regenerative control allowing electric power generated by braking the electric motor (12) to be regenerated to the battery (14);
an accelerator operation tool (16) configured to receive an operation to adjust an output from the electric motor (12); and
a rotation speed sensor (32) configured to detect the rotation speed of the electric motor, wherein
the regeneration controller (39) controls a regeneration output in the regenerative control in response to at least either of an operation position of the accelerator operation tool (16) and the rotation speed detected by the rotation speed sensor (32).

4. The electric vehicle according to claim 2, further comprising:
a battery (14) configured to supply electric power to the electric motor (12);
a regeneration controller (39) configured to perform a regenerative control allowing electric power generated by braking the electric motor (12) to be regenerated to the battery (14);
an accelerator operation tool (16) configured to receive an operation to adjust an output from the electric motor (12); and
the regeneration controller (39) controls a regeneration output in the regenerative control in response to at least either of an operation position of the accelerator operation tool (16) and the rotation speed detected by the rotation speed sensor (32).

5. The electric vehicle according to claim 3 or 4, further comprising:
an electric device (36) driven by the electric motor (12); and
a temperature sensor (37) configured to detect a temperature of the electric device (36), wherein
the regeneration controller (39) controls the regeneration output further in consideration of the temperature detected by the temperature sensor (37).

6. The electric vehicle according to any one of claims 1 to 4, further comprising:
an electric device (36) driven by the electric motor (12); and
a temperature sensor (37) configured to detect a temperature of the electric device (36), wherein
when the temperature detected by the temperature sensor (37) reaches a predetermined temperature or more, the motor controller (24) decreases the rotation speed of the electric motor (12) in response to the temperature.

7. The electric vehicle according to any one of claims 1 to 6, further comprising:
a brake (17, 18, 27) configured to brake the travel device (1, 2), wherein
the motor controller (24) performs the stop control regardless of whether the brake (17, 18, 27) is operated or not.

8. The electric vehicle according to any one of claims 1 to 6, further comprising:
a brake configured to brake the travel device (1, 2); and
a braking operation tool configured to receive an operation on the brake,
wherein
the motor controller (24) stops the stop control in response to the operation on the braking operation tool during the stop control.

9. The electric vehicle according to any one of claims 1 to 8, wherein the motor controller (24) performs the stop control for a predetermined retention period (RP) after the vehicle speed reaches the reference vehicle speed (RS) or less.

10. The electric vehicle according to any one of claims 1 to 9, further comprising:
a stop operation tool (34) configured to receive an operation to stop the stop control, wherein
the motor controller (24) stops the stop control in response to the operation on the stop operation tool (34).

11. The electric vehicle according to any one of claims 1 to 10, further comprising:
a predetermined work device, wherein
the work device performs an operation while the electric vehicle is traveling.
